# EUROPÄISCHE PATENTSCHRIFT

(11) **EP 2 830 837 B1**
(45) Veröffentlichungstag und Bekanntmachung des Hinweises auf die Patenterteilung: **20.11.2019**
(21) Anmeldenummer: 13713765.9
(22) Anmeldetag: 15.03.2013
(51) Int. Cl.: B25J 13/08, B25J 9/16, B25J 11/00

(54) **TRENNEINRICHTUNG UND TRENNVERFAHREN**
PARTING DEVICE AND PARTING METHOD
DISPOSITIF DE COUPE ET PROCÉDÉ DE COUPE

(30) Priorität: 29.03.2012 DE 202012101121 U
(43) Veröffentlichungstag der Anmeldung: 04.02.2015
(73) Patentinhaber: KUKA Industries GmbH, 86165 Augsburg (DE)
(72) Erfinder: KEESE, Markus, 86556 Kühbach (DE)
(74) Vertreter: Ernicke, Klaus Stefan
(86) Internationale Anmeldenummer: PCT/EP2013/055349
(87) Internationale Veröffentlichungsnummer: WO 2013/143879

(56) Entgegenhaltungen:
- EP-A2- 2 087 971
- DE-U1-202010 005 313
- US-A- 6 086 294
- US-A1- 2010 257 986
- US-A1- 2010 332 016
- US-A1- 2011 100 178

## Beschreibung

Die Erfindung betrifft eine Trenneinrichtung, insbesondere eine Trimmeinrichtung, und ein Trennverfahren mit den Merkmalen im Oberbegriff des Verfahrens- und Vorrichtungshauptanspruchs.

Aus der DE 20 2008 002 669 U1 ist eine Trimmeinrichtung für einen überstehenden Folienrand an Solarmodulen bekannt, die einen mehrachsigen Roboter mit positionsgesteuerten Achsen und ein Trennwerkzeug mit mehreren kammartig aufgereihten Schneiddrähten aufweist. Das Trennwerkzeug wird quer zur Randerstreckung an das Werkstück zugestellt und schneidet an mehreren Stellen den Überstand durch. Mittels einer Ausgleichseinrichtung kann dabei das kammartige Trennwerkzeug parallel zum Werkstückrand ausgerichtet werden, z.B. mittels einer Schwenkbewegung. Anschließend wird das Trennwerkzeug am Modulrand entlang bewegt und schneidet den Folienüberstand ab.

Aus der US 2010/0257986 A1 ist eine Trenneinrichtung mit einem mehrgliedrigen, programmierbaren Roboter und einem Trennwerkzeug bekannt, wobei der Roboter als kraftgeregelter Roboter ausgebildet ist und das Trennwerkzeug mit einer Klinge versehen ist.

Es ist Aufgabe der vorliegenden Erfindung, eine weiterentwickelte Trenneinrichtung und ein Trennverfahren aufzuzeigen.

Die Erfindung löst diese Aufgabe mit den Merkmalen im Verfahrens- und Vorrichtungshauptanspruch.

Der Einsatz eines mehrachsigen taktilen Roboters mit vorzugsweise kraftgesteuerten oder kraftgeregelten bzw. momentengesteuerten oder momentengeregelten Roboterachsen bietet verschiedene Vorteile. Zum einen kann der Roboter auf mechanische Widerstände reagieren und bei Bedarf ausweichen. Hierdurch können Beschädigungen des Werkstücks vermieden werden. Die Anstellkraft kann beibehalten und der Trennprozess kann optimiert werden. Außerdem kann der Roboter zur Positionserfassung benutzt werden. Ferner wird der Verschleiß des Werkzeugs reduziert.

Der taktile Roboter eignet sich besonders zum Führen eines mechanischen Trennwerkzeugs. Das Trennwerkzeug ist als Messer ausgebildet. Dieses kann eine einzelne Schneide aufweisen, die ggf. während des Zustell- und/oder Schneidvorgangs überlagerte Eigenbewegungen ausführt. Das Trennwerkzeug hat einen besonders niedrigen Bau- und Kostenaufwand. Ein Messer hat Vorteile gegenüber den im Stand der Technik bekannten Heizdrähten oder Laserstrahlen, die beim Abtrennen das Material anschmelzen und dadurch u.U. schädliche Gase oder Partikel erzeugen. Heizdrähte können außerdem einem erhöhten Verschleiß unterworfen sein. Ein Trennmesser hat diese Nachteile nicht, wobei aber auch bei einem Trennmesser Verschleiß entstehen kann. Der beanspruchte Roboter ermöglicht jedoch eine automatische Verschleißkompensation durch entsprechende Nachführung des Trennwerkzeugs.

Die Trenneinrichtung weist eine im Roboter integrierte, kantentastende Sensorik zur Detektion einer Bezugsstelle, insbesondere eines Randes, am Werkstück auf. Die Sensorik ermöglicht eine exakte Zustellung des Trennwerkzeugs an einen Werkstückrand. Dies ist besonders günstig zum Trimmen und zum Abschneiden eines randseitigen Überstandes, insbesondere eines Folienüberstandes, an einem Werkstück, insbesondere einem plattenförmigen Solarmodul. Für die kantentastende Funktion kann vorteilhafterweise die bereits am Roboter vorhandene Sensorik genutzt werden. Dies bietet eine technische und wirtschaftliche Optimierungsmöglichkeit. Die Sensorik kann nicht nur beim Zustellen eines Trennwerkzeugs, sondern auch im weiteren Verlauf der Trennbewegung zur Positions- und Prozesskontrolle eingesetzt werden.

Ein taktiler, kraft-/momentengeregelter Roboter ist zum sicheren Führen und Positionieren des Trennwerkzeugs vor und während des Trennprozesses besonders gut geeignet. Er mindert ferner den Sicherheitsaufwand. Der Roboter kann auch definierte Kräfte, z.B. zum Führen und ggf. Andrücken eines Trennwerkzeugs, aufbringen. Die Energie- und Betriebsmittelversorgung des Trennwerkzeugs kann von außen oder ggf. aus dem Roboter, z.B. durch Leitungen durch die Hohlwellen des Roboters, zugeführt sein.

Der Roboter kann außerdem für den Trennprozess günstige Bewegungen des Trennwerkzeugs, insbesondere eines Trennmessers, ausführen. Insbesondere sind ziehende Schnitte möglich. Hierbei kann der Roboter ebenfalls Werkstückbeschädigungen vermeiden oder zumindest wesentlich mindern.

Der Roboter ist zum Ausführen einer Vibrationsbewegung, insbesondere beim Zustellen des Trennwerkzeugs, ausgebildet. Alternativ oder zusätzlich ist das Trennwerkzeug als Vibratorwerkzeug, insbesondere als Vibratormesser, ausgebildet.

Zur Erfassung einer Bezugsstelle am Werkstück, insbesondere eines Werkstückrandes, kann eine Vibrationsbewegung des Roboters und/oder des Trennwerkzeugs bei der Zustellung an die Arbeitsstelle, insbesondere an einen abzuschneidenden Überstand, günstig sein. Dies erleichtert und verbessert die Erfassungsgenauigkeit bei der Kantendetektion. Eine Vibrationsbewegung des Roboters und/oder des Trennwerkzeugs quer oder schräg zur Zustellrichtung kann ebenfalls von Vorteil sein und kann insbesondere den weiteren Trennprozess nach erfolgter Zustellung optimieren. Diese Vibrationsbewegung kann alternativ oder zusätzlich zur Zustell-Vibration ausgeführt werden.

Der Arbeitsbereich des Roboters kann mittels einer Bewegungseinrichtung vergrößert werden, die für eine Relativbewegung zwischen Werkstück und Roboter sorgt. Die Bewegungseinrichtung und der Roboter können an eine Steuerung, insbesondere an eine Robotersteuerung, angeschlossen sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1 und 2:: eine Trenneinrichtung mit einem Roboter und einem Trennwerkzeug in Stirnansicht und geklappter Seitenansicht,
- Figur 3:: eine perspektivische Darstellung des Roboters mit dem Trennwerkzeug an einem Solarmodul gemäß Figur 1 und 2,
- Figur 4:: eine abgebrochene und vergrößerte Detailansicht der Trennstelle am Werkstück und
- Figur 5:: einen mehrgliedrigen Roboter mit kraftgeregelten Achsen I bis VII.

Die Erfindung betrifft eine Trenneinrichtung (1), insbesondere eine Trimmeinrichtung, sowie ein Trennverfahren.

Die Trenneinrichtung (1) weist mindestens einen mehrachsigen und programmierbaren Roboter (6) auf, der als taktiler Roboter ausgebildet ist und der ein Trennwerkzeug (8) führt. Der Roboter (6) ist an eine Robotersteuerung (11) angeschlossen. Der taktile Roboter weist eine in den Zeichnungen angedeutete integrierte Sensorik (18) für die Erfassung von extern einwirkenden Kräften und/oder Momenten auf, die mit der Robotersteuerung (11) verbunden ist und zur Steuerung oder Regelung der Roboterbewegungen verwendet wird. Der taktile Roboter kann insbesondere kraft- oder momentengeregelte Achsen haben. Er kann auch als Leichtbauroboter ausgebildet sein.

Das Werkstück (2) hat z.B. eine plattenförmige Gestalt und kann z.B. als Solarmodul ausgebildet sein. Es besitzt z.B. eine prismatische, insbesondere rechteckige Form mit mehreren geraden Rändern (3). Ein Solarmodul (2) kann mehrschichtig aufgebaut sein. Es kann z.B. eine zentrale Schicht mit einer Matrix aus elektrisch leitend verbundenen Solarzellen sowie beidseitige Verbindungs- und Deckschichten, insbesondere eine lichtdurchlässige Frontscheibe und eine lichtsperrende Rückenschicht oder Rückenfolie, aufweisen. Ein Solarmodul (2) kann einen über den oder die Ränder (3) der mehrschichtigen Platte seitlich hinausragenden Überstand (4) aufweisen. Der Überstand (4) kann z.B. ein Folienüberstand von einer Rückenfolie oder einer Zwischenfolie des Solarmoduls (2) sein. Der Überstand (4) kann weicher oder von geringerer Festigkeit als die anderen Teile und insbesondere der Rand (3) des Werkstücks (2) sein.

In der gezeigten Ausführungsform wird das Solarmodul (2) an den Rändern (3) getrimmt, wobei der jeweilige Überstand (4) entlang des Rands (3) und bevorzugt bündig mit der Randfläche abgeschnitten werden kann. Alternativ sind beliebige andere Trennprozesse möglich, die z.B. ein Einschneiden von Ausnehmungen oder ein Durchschneiden des Werkstücks (2) oder ein Abtrennen von Werkstückteilen beinhalten können.

Das Werkstück (2) kann auf einer Unterlage (5), z.B. einem Tisch oder einem Gestell während der Bearbeitung ruhen. Für die Zuführung kann ein Förderer (21) vorgesehen sein. Das Werkstück (2) kann sich während der Bearbeitung in einer Ruhelage befinden. Es kann alternativ bei der Bearbeitung mittels einer Bewegungseinrichtung (19) relativ zum Roboter (6) bewegt werden. Die Bewegungseinrichtung (19) kann vom Förderer (21) oder einem Abschnitt des Förderers (21) gebildet werden. Der Förderer (21) kann ein Linearförderer sein. Die Bewegungseinrichtung (19) kann alternativ ein eigenes Gerät sein, das z.B. als Linearförderer oder als Drehtisch oder dgl. ausgebildet ist. Sie kann auch von einem weiteren Roboter gebildet werden.

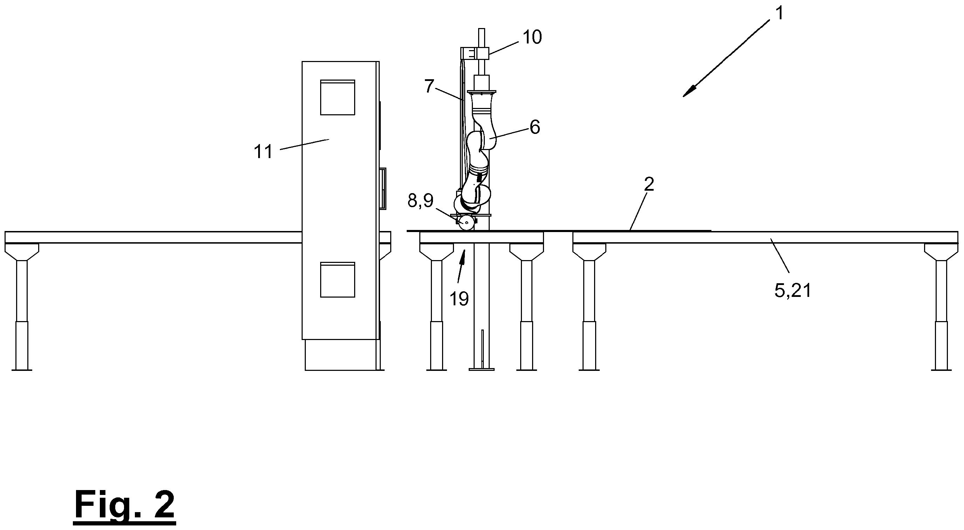

Die Unterlage (5) weist gemäß Figur 2 im Bereich der vorgesehenen Trennstelle(n) am Werkstück (2), eine Ausnehmung oder Unterbrechung für den Durchtritt des Trennwerkzeugs (8) auf. Für den Trennprozess kann das Werkstück (2) grob positioniert werden. Der Roboter (6) ist in der Lage, die Werkstückposition selbsttätig zu finden und den programmierten Trennprozess lagegerecht durchzuführen.

Der Roboter (6) weist mehrere bewegliche und miteinander verbundene Glieder (12,13,14,15) auf. Die Glieder (12,13,14,15) sind vorzugsweise gelenkig und über drehende Roboterachsen I-VII miteinander verbunden. Es ist ferner möglich, dass einzelne Glieder (13,14) mehrteilige und in sich beweglich ausgebildet sind. Im gezeigten Ausführungsbeispiel ist der Roboter (6) als Gelenkarmroboter ausgebildet und weist sieben angetriebene Achsen bzw. Bewegungsachsen I-VII auf. Die Achsen I-VII sind mit der Robotersteuerung (11) verbunden und können gesteuert und ggf. geregelt werden. Das abtriebsseitige Endglied (12) des Roboters (6) ist z.B. als Roboterhand ausgebildet und weist ein um eine Drehachse (16) drehbares Abtriebselement (17), z.B. einen Abtriebsflansch, auf. Die Drehachse (16) bildet die letzte Roboterachse VII. Durch ein ggf. hohles Abtriebselement (17) und ggf. andere Roboterglieder (13,14,15) können eine oder mehrere Leitungen für Betriebsmittel, z.B. Leistungs- und Signalströme, Fluide etc. geführt sein und am Flansch nach außen treten.

Der Roboter (6) hat vorzugsweise drei oder mehr bewegliche Glieder. Im gezeigten Ausführungsbeispiel weist er ein mit dem Untergrund, z.B. einem Sockel oder Gestell (7), verbundenes Basisglied (15) und das vorerwähnte Endglied (12) sowie zwei Zwischenglieder (13,14) auf. Die Zwischenglieder (13,14) sind mehrteilig und in sich verdrehbar mittels Achsen (III) und (V) ausgebildet. Die Zahl der Zwischenglieder (13,14) kann alternativ kleiner oder größer sein. In weiterer Abwandlung können einzelne oder alle Zwischenglieder (13,14) in sich drehfest und ohne zusätzliche Achse ausgebildet sein.

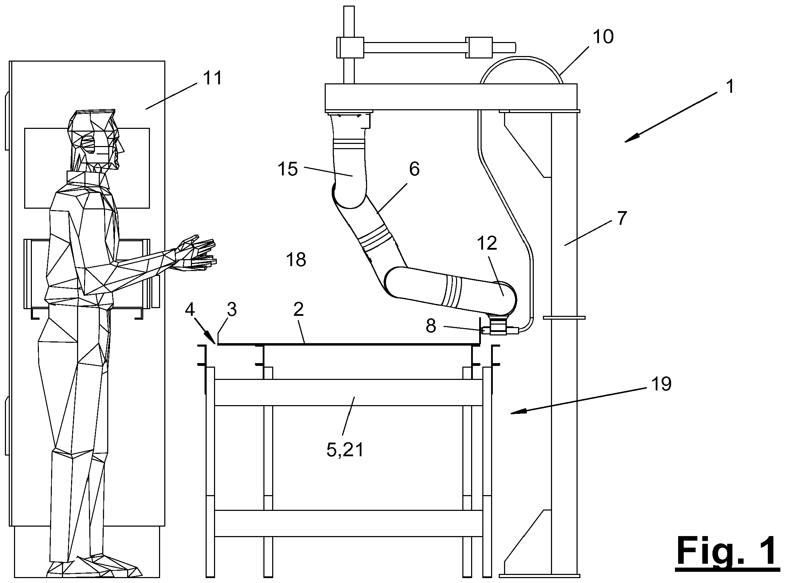

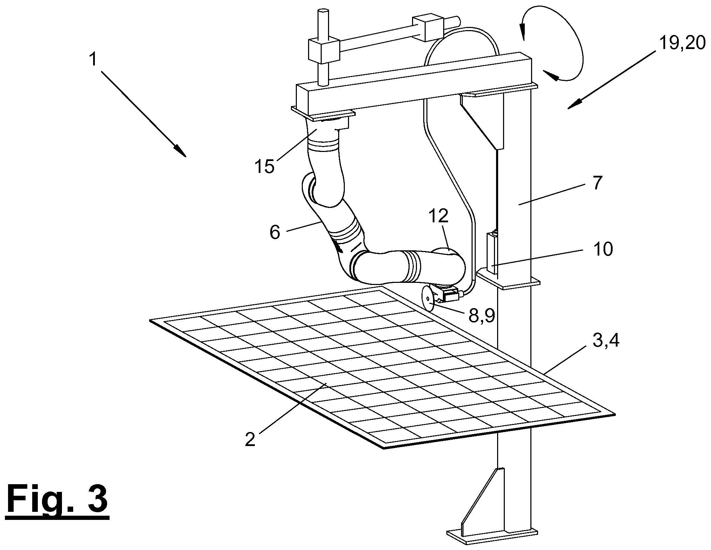

Der Roboter (6) kann stehend oder hängend angeordnet sein. Im Ausführungsbeispiel von Figur 1 bis 3 ist er hängend am Gestell (7) und in etwa mittig über der Bearbeitungsstelle bzw. dem dort positionierten Werkstück (2) angeordnet.

Die Roboterachsen I-VII weisen jeweils ein Drehlager bzw. ein Gelenk und einen hier zugeordneten und ggf. integrierten steuerbaren, ggf. regelbaren Drehantrieb auf. Bei dem gezeigten Roboter (6) ist die Drehachse (16) die abtreibende Roboterachse VII. Außerdem können die Roboterachsen I-VII eine steuer- oder schaltbare Bremse und eine ggf. redundante Sensorik haben, die mit der Robotersteuerung (11) verbunden ist/sind. Die Sensorik kann integriert sein und kann z.B. einen oder mehrere Sensoren an einer oder mehreren Achsen I-VII aufweisen. Diese Sensoren können gleiche oder unterschiedliche Funktionen haben. Sie können insbesondere zum Erfassen von einwirkenden Belastungen, insbesondere von Momenten, ausgebildet sein. Sie können ferner Drehbewegungen und ggf. Drehpositionen detektieren. In einer anderen Ausführungsform kann ein solche mit der Robotersteuerung (11) verbundene Sensorik am Roboter (6) extern angebaut sein, z.B. am Abtriebselement (17) oder am Trennwerkzeug (8). Die Sensorik kann in beiden Varianten in der nachfolgend erläuterten Weise für den Trennprozess eingesetzt werden.

Der Roboter (6) kann eine oder mehrere kraftgesteuerte oder kraftgeregelte Achsen (I - VII) bzw. kraftgesteuerte oder kraftgeregelte Achsantriebe zwischen den Gliedern (12,13,14,15) aufweisen. Der Roboter (6) kann dabei insbesondere eine oder mehrere nachgiebige Achsen (I - VII) bzw. nachgiebige Achsantriebe mit einer Nachgiebigkeitsregelung haben. Die Nachgiebigkeitsregelung kann eine reine Kraftregelung oder eine Kombination aus einer Positions- und einer Kraftregelung sein. Eine solche nachgiebige Achse kann in verschiedener Hinsicht für den Trennprozess vorteilhaft genutzt werden. Einerseits kann der Roboter (6) das Trennwerkzeug (8) federnd ausweichfähig halten und führen, wodurch z.B. Crashs und insbesondere Unfälle mit Personen vermieden werden können. Die Eigenschaft kann auch zum manuellen Teachen und Programmieren benutzt werden. Über eine Belastungserfassung mit der Robotersensorik an den Achsen (I - VII) kann außerdem das Suchen und Finden der Arbeitsposition unterstützt und erleichtert werden. Auch Winkelfehler in der Relativstellung der Glieder (12,13,14,15) können detektiert und bedarfsweise korrigiert werden.

Eine oder mehrere nachgiebige Achsen sind außerdem zum Nachführen des Trennwerkzeugs (8) entsprechend des Vorschubs vorteilhaft. Der Roboter (6) kann außerdem eine definierte Andrückkraft aufbringen. Für diesen Zweck ist es ebenfalls günstig, wenn der Roboter (6) eine oder mehrere Kraft- und ggf. positionsgeregelte Achsen (I - VII) aufweist.

Der Roboter (6) kann alternativ oder zusätzlich eine oder mehrere angetriebe Achsen (I - VII) ohne Nachgiebigkeit und z.B. mit einer exakten Positionssteuerung oder Positionsregelung aufweisen.

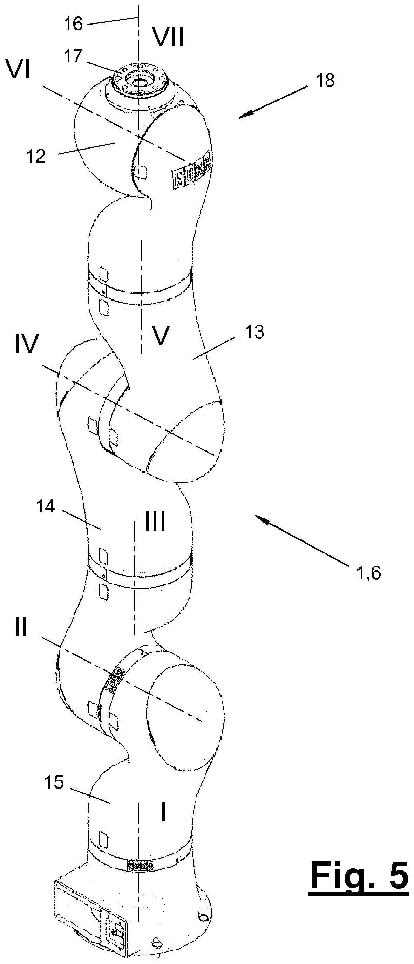

Die Figur 5 zeigt den Roboter (6) des Ausführungsbeispiels in einer Streckstellung und verdeutlicht die Ausbildung der Glieder (12,13,14,15) und der angetriebenen und steuerbaren bzw. regelbaren Achsen (I - VII). Hier sind auch die geteilten Ausbildungen der länglichen Zwischenglieder (13,14) mit der jeweils hier integrierten Drehachse (III) und (V) dargestellt. Die Versorgungsleitungen für Betriebsmittel sind im Inneren der Glieder (12,13,14,15) geführt, die hierfür z.B. Hohlwellen an den Gelenken bzw. Drehlagern aufweisen.

Der dargestellte Roboter (6) ist als Leichtbauroboter ausgebildet und besteht aus leichtgewichtigen Materialien, z.B. Leichtmetallen und Kunststoff. Er hat auch eine kleine Baugröße. Das in seiner Konstruktion und Funktion vereinfachte Trennwerkzeug (8) hat ebenfalls ein geringes Gewicht. Der Roboter (6) mit seinem Trennwerkzeug (8) ist dadurch insgesamt leichtgewichtig und kann ohne größeren Aufwand transportiert und von einem Einsatzort zum anderen verlegt werden. Das Gewicht von Roboter (6) und Trennwerkzeug (8) kann unter 50 kg, insbesondere bei ca. 30 kg, liegen. Durch die Möglichkeit des manuellen Teachens kann die Trenneinrichtung (1) schnell und einfach programmiert, in Betrieb genommen und an unterschiedliche Trennprozesse und -jobs angepasst werden.

Die vorgenannte Kraftsteuerung oder Kraftregelung der Roboterachsen (I-VII) bezieht sich auf die Wirkung nach außen am Abtriebselement (17) des Endglieds (12) sowie auf die dort einwirkenden Reaktionskräfte. Roboterintern findet an den drehenden Achsen oder Achsantrieben eine Momentensteuerung oder Momentenregelung statt.

Der Roboter (6) ist programmierbar, wobei die Robotersteuerung (11) eine Recheneinheit, einen oder mehrere Speicher für Daten oder Programme sowie Eingabe- und Ausgabeeinheiten aufweist. Das Trennwerkzeug (8) und ggf. die Bewegungseinrichtung (19) kann mit der Robotersteuerung (11) oder einer anderen gemeinsamen Steuerung verbunden und kann z.B. als gesteuerte Achse in der Robotersteuerung implementiert sein. Die Robotersteuerung (11) kann prozessrelevante Daten, z.B. Sensordaten, speichern und für eine Qualitätskontrolle und -sicherung protokollieren.

Das Trennwerkzeug (8) ist als Messer ausgebildet. Das Trennwerkzeug (8) kann ein Trennblatt (9), insbesondere ein einzelnes Trennblatt, aufweisen. Dieses kann starr oder beweglich angeordnet sein. In der gezeigten Ausführungsform hat das Trennmesser (8) ein rotierendes, scheibenförmiges Trennblatt (9) mit Schneidelementen am randseitigen Umfang und ist mit einem Drehantrieb verbunden. Alternativ kann ein Trennmesser (8) ein längliches Trennblatt (9), z.B. eine Klinge, aufweisen, die starr angeordnet ist. Sie kann alternativ oszillieren und hierfür einen entsprechenden Antrieb aufweisen. Das Trennmesser kann wechselbar sein mittels einer Magazinanordnung. Das Trennmesser kann auch ein Heißmesser sein.

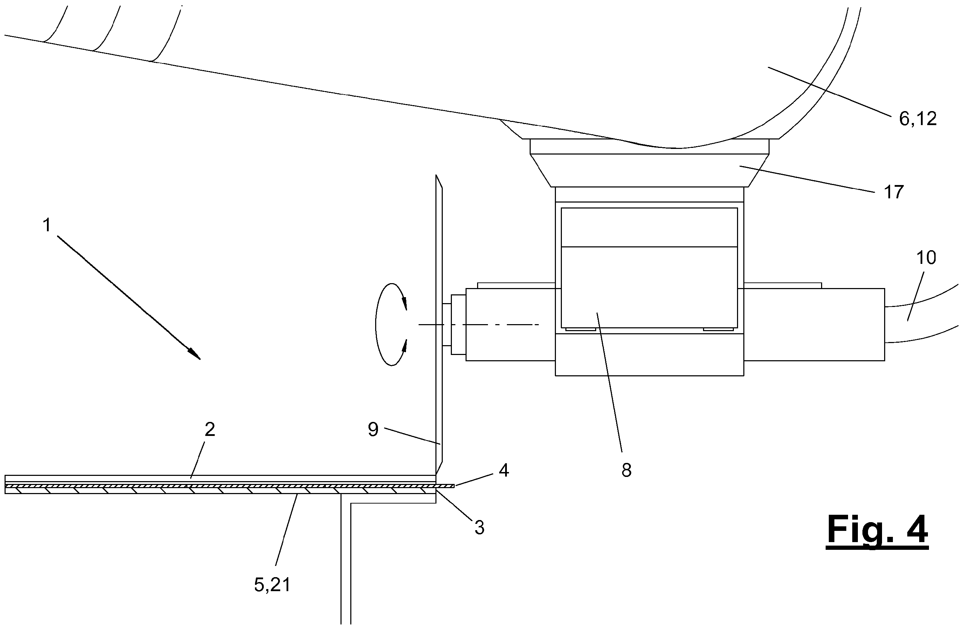

Das Trennwerkzeug (8) besitzt ferner eine Werkzeugversorgung (10), die an einem Gestell (7) des Roboters (6) angeordnet sein kann und die mittels flexibler Leitungen die erforderlichen Trennmittel, z.B. Energie, Kühlmittel, Trennhilfemittel oder dgl. der Trennstelle und dem Trennblatt (9) bzw. seinem Antrieb zuführt. Wie Figur 4 verdeutlicht, ist am Endglied (12), insbesondere am Abtriebsflansch, ein Werkzeughalter montiert, in dem der Korpus bzw. der Antrieb des Werkzeugs (8) fest oder lösbar und ggf. wechselbar angeordnet ist. Die Trenneinrichtung (1) weist eine Sensorik (18) auf, die eine Bezugsstelle (3) an einem Werkstück (2), z.B. den Rand des Solarmoduls, detektiert. Hierbei handelt es sich um eine Kanten tastende Sensorik. Die Sensorik (18) kann in der vorerwähnten Weise im Roboter (6) und/oder im Trennwerkzeug (8) angeordnet sein.

Die Sensorik (18) ist im Roboter (6) angeordnet und wird von den dort bereits vorhandenen ein oder mehreren Kraft- und/oder Momentensensoren an einer oder mehreren Roboterachsen I-VII gebildet. Der Roboter (6) kann bei der Zustellung und Führung des Trennwerkzeugs (8) beim Trennprozess durch diese integrierte Sensorik (18) mechanische Widerstände detektieren und an die Robotersteuerung (11) melden, die dann entsprechende Roboterreaktionen auslöst.

Der Roboter (6) kann z.B. zu Beginn des Trennprozesses das Trennwerkzeug (8) von außen an den Werkstückrand (3) zustellen und dabei den Überstand (4) einschneiden. Die Zustellbewegung kann quer oder bevorzugt schräg zum Verlauf bzw. zur Längserstreckung des Überstands (4) und des Rands (3) gerichtet sein. Der Rand (3) kann durch eine Erhöhung des mechanischen Widerstands beim Zustellen detektiert werden. Der Roboter (6) kann dann das Trennwerkzeug (8) umorientieren und die weitere Trennbewegung entlang des Randes (3) ausführen. Er bewegt dabei das Trennwerkzeug (8) entlang einer programmierten Bahn. Wenn der Randverlauf von der programmierten Bahn abweicht, kann dies ebenfalls über die Sensorik (18) detektiert und durch entsprechende Korrekturbewegungen des Roboters (6) kompensiert werden.

Die sensorische Erfassung der Bezugstelle (3) bzw. des Werkstückrands wird dadurch erleichtert und verbessert, dass das Trennwerkzeug (8) in Zustellrichtung eine Vibrations- oder Zitterbewegung ausführt. Die Vibrationsbewegung kann auch oszillierend, insbesondere sinusförmig oder sägezahnförmig sein. Dies kann zu entsprechenden Schwingungen des Werkstücks (2), insbesondere des Solarmoduls, führen, die eine bessere und genauere sensorische Kanten- oder Randerfassung ermöglichen. Eine in Zustellrichtung ausgeführte Vibrationsbewegung kann auf unterschiedliche Weise erzeugt werden. Im gezeigten Ausführungsbeispiel führt der Roboter (6) bei der Zustellbewegung solche überlagerte Vibrations- oder Zitterbewegungen aus. Alternativ oder zusätzlich kann das Trennwerkzeug (8) Vibrationsbewegungen erzeugen. Hierfür kann es z.B. als Vibratorwerkzeug, insbesondere als Vibratormesser, ausgebildet sein.

In Abwandlung des beschriebenen Ausführungsbeispiels kann eine durch Vibration angeregte Schwingung des Werkstücks (2) auch auf andere Weise erfasst werden, z.B. am Werkstück (2) selbst und z.B. durch eine optische Sensorik. Zum Trimmen des Werkstücks (2) kann der Roboter (6) einen Zustellschnitt etwa im mittleren Bereich des Werkstückrands (3) ansetzen und nach Erreichen des Randes (3) das Trimmwerkzeug (8) weiter zum Randende bzw. bis zu einer Ecke führen. Anschließend wird am gleichen Rand (3) ein weiterer Trennschnitt in Gegenrichtung geführt. Bei dem vierseitigen Solarmodul (2) werden somit acht Trennschnitte ausgeführt.

Die vorgenannte Bewegungseinrichtung (19) ermöglicht eine Vergrößerung des Arbeitsbereichs des Roboters (6). Die Bewegungseinrichtung (19) kann alternativ oder zusätzlich zu einer Fördereinrichtung für das Werkstücks (2) eine Zusatzachse (20) für den Roboter (6) aufweisen. Hierfür kann z.B. das ständerartige Gestell (7) um eine oder mehrere Achsen beweglich sein. Es kann z.B. einen schwenkbaren Ausleger besitzen, an dem der Roboter (6) hängend montiert ist.

Aufgrund des verwendeten taktilen, insbesondere kraft-/momentengeregelten Roboters (6) kann die Trenneinrichtung (1) bzw. die Station ohne Schutzmaßnahmen für das Personal auskommen. Lediglich für das Trennwerkzeug (8) kann eine Schutzeinrichtung erforderlich sein.

Abwandlungen der gezeigten und beschriebenen Ausführungsformen sind in unterschiedlicher Weise möglich. Zum einen kann der Roboter (6) in der Zahl und Ausbildung seiner Glieder (12,13,14,15) und auch seiner angetriebenen Achsen (I - VII) variieren. Er kann eine beliebige Zahl und Kombination von rotatorischen und/oder translatorischen Achsen aufweisen, wobei deren Achsantriebe und Lagerungen sowie die ggf. zugeordnete Sensorik entsprechend unterschiedlich ausgebildet sind.

### BEZUGSZEICHENLISTE

- 1: Trenneinrichtung, Trimmeinrichtung
- 2: Werkstück, Solarmodul
- 3: Rand, Bezugsstelle
- 4: Überstand
- 5: Unterlage
- 6: Roboter, Leichtbauroboter
- 7: Gestell
- 8: Trennwerkzeug, Messer
- 9: Trennblatt, Klinge
- 10: Werkzeugversorgung
- 11: Steuerung, Robotersteuerung
- 12: Glied, Endglied, Hand
- 13: Glied, Zwischenglied
- 14: Glied, Zwischenglied
- 15: Glied, Basisglied
- 16: Drehachse
- 17: Abtriebselement
- 18: Sensorik
- 19: Bewegungseinrichtung
- 20: Zusatzachse
- 21: Förderer

- I - VII: Achse von Roboter

## Patentansprüche

1. Trenneinrichtung, insbesondere Trimmeinrichtung, mit einem mehrgliedrigen (12,13,14,15) programmierbaren Roboter (6) und einem Trennwerkzeug (8), wobei der Roboter (6) als taktiler, kraft-/momentengeregelter Roboter ausgebildet ist, wobei das Trennwerkzeug (8) als Messer ausgebildet ist, wobei die Trenneinrichtung (1) eine im Roboter (6) integrierte kantentastende Sensorik (18) aufweist, die mindestens einen Kraft- und/oder Momentensensor an einer Roboterachse (I-VII) aufweist und geeignet ist, eine Bezugsstelle (3) am Werkstück (2), insbesondere einen Rand, zu detektieren, und wobei der Roboter (6) und/oder das Trennwerkzeug (8) zur Erzeugung einer Vibrationsbewegung in Zustellrichtung, ausgebildet ist/sind.

2. Trenneinrichtung nach Anspruch 1, **dadurch gekennzeichnet, dass** der Roboter (6) eine oder mehrere kraftgesteuerte oder kraftgeregelte Achsen (I - VII) aufweist.

3. Trenneinrichtung nach Anspruch 1 oder 2, **dadurch gekennzeichnet, dass** der Roboter (6) mindestens eine nachgiebige Achse (I - VII) mit einer Nachgiebigkeitsregelung, insbesondere einer reinen Kraftregelung oder einer Kombination aus Positions- und Kraftregelung, aufweist.

4. Trenneinrichtung nach Anspruch 1, 2 oder 3, **dadurch gekennzeichnet, dass** das Trennwerkzeug (8) ein bewegliches, insbesondere rotierendes oder oszillierendes Trennblatt (9) aufweist.

5. Trenneinrichtung nach einem der vorhergehenden Ansprüche, **dadurch gekennzeichnet, dass** die Trenneinrichtung (1) zum Abtrennen von einem randseitigen Überstand (4) an einem plattenförmigen Werkstück (2), insbesondere zum Trimmen an einem Solarmodul, vorgesehen und ausgebildet ist.

6. Trenneinrichtung nach einem der vorhergehenden Ansprüche, **dadurch gekennzeichnet, dass** der Roboter (6) darauf programmiert ist, das Trennwerkzeug (8) an einem randseitigen Überstand (4) an einem Werkstück (2) schräg zum Verlauf des Überstands (4) zuzustellen und nach detektiertem Erreichen des Werkstückrands (3) am Rand (3) entlang zu bewegen.

7. Trenneinrichtung nach einem der vorhergehenden Ansprüche, **dadurch gekennzeichnet, dass** der Roboter (6) darauf programmiert ist, das Trennwerkzeug (8) an einem mittleren Bereich eines Überstands (4) zuzustellen und dann zu einem Ende des Überstands (4) an einem Rand (3) entlang weiter zu bewegen.

8. Trenneinrichtung nach einem der vorhergehenden Ansprüche, **dadurch gekennzeichnet, dass** die Trenneinrichtung (1) eine Bewegungseinrichtung (19) für das Werkstück (2) und/oder für den Roboter (6) aufweist, wobei die Bewegungseinrichtung (19) und der Roboter (6) an eine Steuerung (11), insbesondere an eine Robotersteuerung, angeschlossen sind.

9. Verfahren zum Trennen, insbesondere Trimmen, von Werkstücken (2), insbesondere Solarmodulen, mit einem mehrgliedrigen (12,13,14,15) programmierbaren Roboter (6) und einem Trennwerkzeug (8), wobei das Trennwerkzeug (8) von einem taktilen, kraft-/momentengeregelten Roboter (6) geführt wird, wobei der taktile Roboter (6) ein als Messer ausgebildetes Trennwerkzeug (8) führt, wobei mit einer im Roboter (6) integrierten kantentastenden Sensorik (18) mit mindestens einem Kraft- und/oder Momentensensor an einer Roboterachse (I -VII) eine Bezugsstelle (3) am Werkstück (2), insbesondere ein Rand, detektiert wird, und wobei der Roboter (6) und/oder das Trennwerkzeug (8) beim Trennprozess, insbesondere beim Zustellen des Trennwerkzeugs (8), eine Vibrationsbewegung in Zustellrichtung ausführt/ ausführen.

10. Verfahren nach Anspruch 9, **dadurch gekennzeichnet, dass** eine oder mehrere Achsen (I - VII) des Roboters (6) kraftgesteuert oder kraftgeregelt oder auf Position und Kraft geregelt werden.

11. Verfahren nach Anspruch 9 oder 10, **dadurch gekennzeichnet, dass** das Trennwerkzeug (8) vom Roboter (6) federnd ausweichfähig gehalten und geführt wird.

12. Verfahren nach einem der Ansprüche 9 bis 11, **dadurch gekennzeichnet, dass** an einem plattenförmigen Werkstück (2), insbesondere einem Solarmodul, ein randseitiger Überstand (4) abgetrennt wird.

13. Verfahren nach einem der Ansprüche 9 bis 12, **dadurch gekennzeichnet, dass** der Roboter (6) das Trennwerkzeug (8) an einem randseitigen Überstand (4) eines Werkstücks (2) schräg zum Verlauf des Überstands (4) zustellt und das Trennwerkzeug (8) nach detektiertem Erreichen des Werkstückrands (3) am Rand (3) entlang bewegt.

## Claims

1. Parting device, in particular trimming device, having a multi-member (12, 13, 14, 15) programmable robot (6) and a parting tool (8) wherein the robot (6) is formed as a tactile force-/torque-controlled robot, wherein the parting tool (8) is formed as a knife, wherein the parting device (1) has an edge-sensing sensor (18) integrated in the robot (6), which sensor has at least one force and/or torque sensor on a robot axis (I - VII) and is suitable for detecting a reference point (3) on the workpiece (2), in particular an edge, and wherein the robot (6) and/or the parting tool (8) is/are designed to generate a vibrational movement in the feed direction.

2. Parting device according to Claim 1, **characterized in that** the robot (6) has one or more force-controlled or force-regulated axes (I - VII).

3. Parting device according to Claim 1 or 2, **characterized in that** the robot (6) has at least one flexible axis (I - VII) with flexibility regulation, in particular pure force regulation or a combination of position and force regulation.

4. Parting device according to Claim 1, 2 or 3, **characterized in that** the parting tool (8) has a movable, in particular rotating or oscillating, parting blade (9).

5. Parting device according to one of the preceding claims, **characterized in that** the parting device (1) is provided and designed for severing an edge projection (4) on a plate-like workpiece (2), in particular for trimming on a solar module.

6. Parting device according to one of the preceding claims, **characterized in that** the robot (6) is programmed to feed the parting tool (8) on an edge projection (4) on a workpiece (2) obliquely with respect to the course of the projection (4) and, after detecting that the workpiece edge (3) has been reached, to move along the edge (3).

7. Parting device according to one of the preceding claims, **characterized in that** the robot (6) is programmed to feed the parting tool (8) to a central region of a projection (4) and then to move further along an edge (3) to one end of the projection (4).

8. Parting device according to one of the preceding claims, **characterized in that** the parting device (1) has a movement device (19) for the workpiece (2) and/or for the robot (6), wherein the movement device (19) and the robot (6) are connected to a controller (11), in particular to a robot controller.

9. Method for parting, in particular trimming, workpieces (2), in particular solar modules, having a multi-member (12, 13, 14, 15) programmable robot (6) and a parting tool (8), wherein the parting tool (8) is guided by a tactile, force-/torque-controlled robot (6), wherein the tactile robot (6) guides a parting tool (8) formed as a knife, wherein, by using an edge-sensing sensor (18) integrated in the robot (6) and having at least one force and/or torque sensor on a robot axis (I - VII), a reference point (3) on the workpiece (2), in particular an edge, is detected, and wherein the robot (6) and/or the parting tool (8) execute(s) a vibrational movement in the feed direction during the parting process, in particular when feeding in the parting tool (8).

10. Method according to Claim 9, **characterized in that** one or more axes (I - VII) of the robot (6) is/are force-controlled or force-regulated or regulated in position and force.

11. Method according to Claim 9 or 10, **characterized in that** the parting tool (8) is held and guided by the robot (6) in a sprung and yieldable manner.

12. Method according to one of Claims 9 to 11, **characterized in that** an edge-side projection (4) on a plate-like workpiece (2), in particular a solar module, is severed.

13. Method according to one of Claims 9 to 12, **characterized in that** the robot (6) feeds the parting tool (8) to an edge projection (4) of a workpiece (2) obliquely relative to the course of the projection (4), and, after detecting that the workpiece edge (3) has been reached, moves the parting tool (8) along the edge (3).

## Revendications

1. Dispositif de coupe, notamment dispositif de taille, comprenant un robot (6) programmable à plusieurs membres (12, 13, 14, 15) et un outil de coupe (8), le robot (6) étant réalisé sous la forme d'un robot tactile à régulation de force/moment, l'outil de coupe (8) étant réalisé sous la forme d'un couteau, le dispositif de coupe (1) possédant un système de détection (18) à balayage des bords intégré dans le robot (6), lequel possède au moins un capteur de force et/ou de moment au niveau d'un axe de robot (I-VII) et est conçu pour détecter un point de référence (3) au niveau de la pièce (2), notamment un bord, et le robot (6) et/ou l'outil de coupe (8) étant configuré(s) pour générer un mouvement de vibration dans la direction de l'approche.

2. Dispositif de coupe selon la revendication 1, **caractérisé en ce que** le robot (6) possède un ou plusieurs axes (I-VII) commandés en force ou régulés en force.

3. Dispositif de coupe selon la revendication 1 ou 2, **caractérisé en ce que** le robot (6) possède au moins un axe (I-VII) souple avec une régulation de la souplesse, notamment une régulation de force pure ou une combinaison de régulation de la position et de la force.

4. Dispositif de coupe selon la revendication 1, 2 ou 3, **caractérisé en ce que** l'outil de coupe (8) possède une lame de coupe (9) mobile, notamment rotative ou oscillante.

5. Dispositif de coupe selon l'une des revendications précédentes, **caractérisé en ce que** le dispositif de coupe (1) est conçu et configuré pour la découpe d'une saillie (4) côté bord au niveau d'une pièce (2) en forme de plaque, notamment pour la taille au niveau d'un module solaire.

6. Dispositif de coupe selon l'une des revendications précédentes, **caractérisé en ce que** le robot (6) est programmé pour approcher l'outil de coupe (8) d'une saillie (4) côté bord au niveau d'une pièce (2) en biais par rapport au tracé de la saillie (4), et le déplacer le long du bord (3) après avoir détecté que le bord de pièce (3) a été atteint.

7. Dispositif de coupe selon l'une des revendications précédentes, **caractérisé en ce que** le robot (6) est programmé pour approcher l'outil de coupe (8) d'une zone centrale d'une saillie (4) et ensuite poursuivre son déplacement le long d'un bord (3) vers une extrémité de la saillie (4).

8. Dispositif de coupe selon l'une des revendications précédentes, **caractérisé en ce que** le dispositif de coupe (1) possède un dispositif de déplacement (19) pour la pièce (2) et/ou pour le robot (6), le dispositif de déplacement (19) et le robot (6) étant raccordés à une commande (11), notamment à une commande de robot.

9. Procédé de coupe, notamment de taille, de pièces (2), notamment de modules solaires, comprenant un robot (6) programmable à plusieurs membres (12, 13, 14, 15) et un outil de coupe (8), l'outil de coupe (8) étant guidé par un robot (6) tactile à régulation de force/moment, le robot (6) tactile guidant un outil de coupe (8) réalisé sous la forme d'un couteau, un point de référence (3) au niveau de la pièce (2), notamment un bord, étant détecté avec un système de détection (18) à balayage des bords intégré dans le robot (6) et comprenant au moins un capteur de force et/ou de moment au niveau d'un axe de robot (I-VII), et le robot (6) et/ou l'outil de coupe (8) exécutant un mouvement de vibration dans la direction de l'approche lors du processus de coupe, notamment lors de l'approche de l'outil de coupe (8).

10. Procédé selon la revendication 9, **caractérisé en ce qu'**un ou plusieurs axes (I-VII) du robot (6) sont commandés en force ou régulés en force ou régulés en position et en force.

11. Procédé selon la revendication 9 ou 10, **caractérisé en ce que** l'outil de coupe (8) est maintenu et guidé par le robot (6) de manière à pouvoir être dévié avec effet de ressort.

12. Procédé selon l'une des revendications 9 à 11, **caractérisé en ce qu'**une saillie (4) côté bord est découpée au niveau d'une pièce (2) en forme de plaque, notamment d'un module solaire.

13. Procédé selon l'une des revendications 9 à 12, **caractérisé en ce que** le robot (6) approche l'outil de coupe (8) d'une saillie (4) côté bord d'une pièce (2) en biais par rapport au tracé de la saillie (4), et déplace l'outil de coupe (8) le long du bord (3) après avoir détecté que le bord de pièce (3) a été atteint.
